# EUROPEAN PATENT APPLICATION

(11) **EP 4 235 517 A1**
(43) Date of publication of application: **30.08.2023**
(21) Application number: 22465514.2
(22) Date of filing: 28.02.2022
(51) Int. Cl.: G06N 5/02, G06F 16/25

(54) **WRAPPER, COMPUTER PROGRAM PRODUCT, SYSTEM AND COMPUTER IMPLEMENTED METHOD FOR DATA TRANSFORMATION**

(71) Applicant: Siemens Aktiengesellschaft, 80333 München (DE)
(72) Inventor: SHYAM SUNDER, Swathi, 560060 Bengaluru (IN); AIGNER, Tobias, 81543 München (DE); COMAN, Rares Paul, 507190 Brasov (RO); N, Madhusudanan, 560036 Bengaluru (IN)
(74) Representative: Siemens Patent Attorneys

(57) **Abstract**

- The present invention relates to data transformation from source data in RDB format to result data in RDF format, and more particularly relates to a system and method for efficient (R2)RML mapping-based data transformation. The invention helps to make source data from e.g., sensors and/or monitoring devices machine readable by transforming datasets in RDB format to datasets in graph dataset format as RDF datasets are. The latter graph RDF datasets may than be read out and used by machines, e.g., processor units. The proposed solution in form of a unified interface being a wrapper service serves as a simplistic interface that absorbs complexities arising from diverse tool implementations, accelerates registration of other tools, both existing and new, e.g., when new versions are released.

## Description

The present invention relates to data transformation from source data in RDB format to result data in RDF format, and more particularly relates to a system and method for efficient (R2)RML mapping-based data transformation. The invention helps to make source data from e.g., sensors and/or monitoring devices machine readable by transforming datasets in RDB format to datasets in graph dataset format as RDF datasets. The latter graph RDF datasets may than be read out and used by machines, e.g., processor units.

In an industrial scenario, data may be generated during each phase of a product 's manufacturing and/or product's lifecycle. The whole or parts of the data thus generated may be associated with, for example, planning, design, -further - manufacturing, processing, operation and/or maintenance of the product. Each of the phases correspond to a specific domain and are associated with different forms of structured data. The structured data are thus the "source data" as the term is used here and may be stored in different relational databases, so called "RDBs".

For production of so called "digital twins" for process plants (e.g., industrial/power/oil and gas plants) it is usual to drive activities such as plant monitoring & optimization, plant maintenance & optimization, plant modernization, and comparison of plants. All these activities create these "source data" in different formats, e.g., formats as Excel, CSV, XML, JSON data. The sources refer to databases like MySQL, PostgreSQL, MSSQL and files.

Creating plant digital twins is made efficient via knowledge graphs, based on Resource Description Framework "RDF" dataset and/or databases as "source data", based on RDBs from a lot of different formats and sources needs to be integrated in RDFs to succeed, especially to succeed automatically.

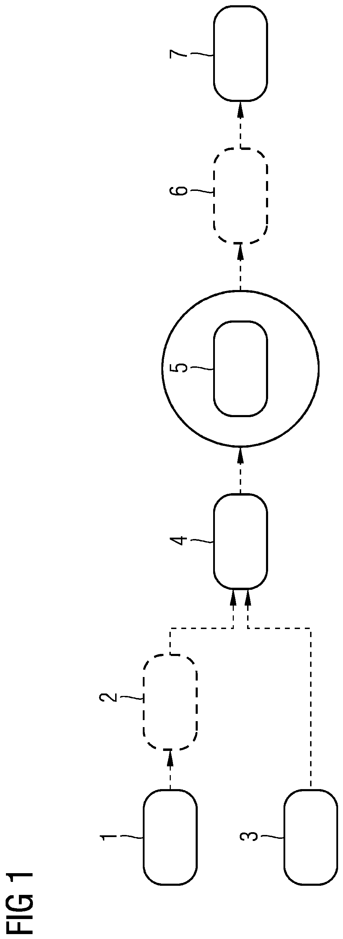

The process of creating the RDF database for a knowledge graph from RDB source data is depicted in a general overview in figure 1, showing state of the art.

Conventionally, integrating the structured RDB-format source data corresponding to different domains and/or formats involves the use of ETL "Extract, Transform, Load" processes for mapping the structured data to RDF data especially by an ontology of a knowledge graph.

R2RML and RML -"(R2)RML" stands for both or either one of them - are mapping specifications used to convert source data from various heterogenous sources to RDF format. For this, one or more R2RML and/or RML processor units are used. Typically, it is used in ETL pipelines. Several solutions exist to process the mappings. The available tools differ in various aspects, have different features and advantages as well as disadvantages. For instance, this includes interfaces to the tools, how a processor is used, for example as an API or as a graphical user interface or as a library, form of access input and output modes and/or supported databases. Likewise, the RDF generation and serialization time differ across the available tools.

"Serialization time" is the time used for the transformation of source data into dataset for semantic graphs, e.g., dataset for knowledge graphs in RDF format. Serialization is the process of translating a data structure of object state into a format that can be stored - for example in a file or memory data buffer - or transmitted for example over a computer network - and reconstructed later possibly in a different computer environment. When the resulting series of bits is reread according to the serialization format, it can be used to create a semantically identical clone of the original object.

Sometimes the term "serialization time" is used for the time necessary for the performance of the last step of the transformation only.

One problem with using only one R2RML processor unit and/or RML processing unit is, that the RML processing unit introduces some limiting factors. Dynamically changing requirements can make it a challenge if a specific processor unit is not matching the features. It can be very time consuming and expensive to replace existing solutions. This drawback of the state of the art should be overcome by the present invention.

Figure 1 - state of the art - shows a high-level explanatory overview of an ETL workflow to produce a knowledge graph from source data. In the first step source data 1 is generated and loaded from the data source 1, for example a device for plant monitoring, sensor, camera and/or analyzing device to check product quality.

Example of data sources include industrial plant(s), industrial production line(s), traffic, energy, air and/or light distribution respective observation within a crowded city or part(s) thereof, meteorological data, data of electrical current flow, data of geographical plant(s) and/or data of parts of a plant like data of pumps, motors, valves, vessels which are obtained during different operational phases of production or manufacturing along an industrial production line. Usually, data are generated by data generation devices such as sensors, analyzing and/or monitoring devices.

These source data 1 may refer to planning, managing, configuring and/or controlling of - for example - a production line. The collection of these source data 1 may optionally be subjected to any necessary pre-processing 2. Independently of the pre-processing, an ontology 3 is developed and/or imported for the domain corresponding to the source data 1 being considered. Additionally, mappings 4 from the source data 1 to the ontology are also designed and/or selected.

This is followed by execution of the mappings 5 on the source data 1 to generate a graph 7. This processing step 5 is the core during the knowledge graph 7 creation through an ETL workflow from source data 1. Between the core mapping rule execution step 5 and the knowledge graph 7 creation there may be optionally a postprocessing step 6 being executed.

For example, source data as e.g., plant data, can be in formats like Excel XML, JSON, MSQL and/or CSV files. Microsoft^{®} Excel enables users to format, organize and calculate data in a spreadsheet. A "CSV" - Comma-separated values - file is a delimited text file that uses a comma to separate values. Each line of the file is data record. Each record consists of one or more fields, separated by commas. The use of the comma as a field separator is the source of the name for this file format.

XML files "Extendible Markup Language" is a markup language that defines a set of rules for encoding documents in a format that is both human-readable and machine-readable. The World Wide Web Consortium's XML 1.0 specification of 1998 and several other related specifications - all of them free open standards - define XML.

JSON is an open standard file format and data interchange format that uses human-readable text to store and transmit data objects consisting of attribute-value pairs and arrays. It is a common data format with diverse uses in electronic data interchange, including that of web applications with servers.

Source data of industrial real environment are available in many relational formats and from many devices, serving as sources. Usually, source data is stored in different relational databases (RDB). However, integrations such heterogenous formats and sources is a difficult task, especially finding a suitable processor unit to map the source data during an ETL workflow process. Knowledge graphs (KGs) are suitable and commonly used solution for data integration. So, source data from different source formats can be mapped to graph schemas, formally referred to as ontologies.

A knowledge graph "KG" is a knowledge base that uses a graph-structured data model or topology to integrate data. A knowledge graph is - for example - used to store interlinked descriptions of entities - objects, events, situations, monitoring data of plants, production lines etc. Data stored in a knowledge graph are suitable to be processed by artificial intelligence, cloud applications, other applications and/or automated controls.

World Wide Web becomes more and more machine readable. Technologies like RDF and OWL are used to make WWW machine readable. Therefore, source data in RDB format need to be mapped and transformed into RDF dataset to use them.

RDB "relational database" is a digital database based on the relational model of data, as proposed in 1970. Relational databases have data stored in rows and columns, like Excel. Further examples for RDBs are Microsoft SQL Server, Oracle Database, MySQL, PostgreSQL and IBM DB2.

Besides those examples of source data in various formats, there may environments that create source data by legacy systems so that there is a need to combine legacy systems with newer systems. Interoperability between the systems is important. Due to assets that have long lifecycles and their data being in legacy formats, replacing legacy systems may not always be practical. But the need still exists to support the migration of their data to contemporary formats to integrate them with the rest of the business.

RDF "Resource Description Framework" is a family of World Wide Web Consortium specifications originally designed as a data model for metadata. RDF is a standard model for data interchange on the Web. RDF extends the linking structure of the Web to use URIs to name the relationship between things as well as the two ends of the link - this is usually referred to as a "triple".

URI "Uniform Resource Identifier" is a unique sequence of characters that identifies a logical or physical resource used by web technologies. URIs may be used to identify anything, including real-world objects, such as peoples, places, concepts, information resources such as web pages and/or books. Some URIs provide a means of locating and retrieving information resources on a network (either on the Internet or on another private network, such as a computer filesystem or an Intranet); these are Uniform Resource Locators (URLs). A URL provides the location of the resource. A URI identifies the resource by name at the specified location or URL. URIs are used to identify anything described using RDF, for example, concepts that are part of an ontology defined using the Web Ontology Language "OWL".

The Internationalized Resource Identifier "IRI" is an internet protocol standard which builds on the Uniform Resource Identifier URI protocol by greatly expanding the set of permitted characters. It was defined by the Internet Engineering Task Force. For example, besides the characters used by URI, IRI comprises also Chinese, Japanese, Korean and Cyrillic characters.

"(R2)RML" mapping defines a mapping from a RDB to RDF. It is a structure that consists of one or more triples maps. The input to a (R2)RML mapping is called the input database and contents the source data. A (R2)RML processor is a system that, given a (R2)RML mapping and an input database, provides access to the output dataset being RDF.

W3C "World Wide Web Consortium" is an international community where Member organizations, a full-time staff, and the public work together to develop open standards to ensure the long-term growth of the Web.

"Turtle" Terse RDF Triple Language is a syntax and file format for expressing data in the RDF data model. Turtle syntax is like that of SPARQL and RDF query language. It is a common data format for storing RDF data.

"RDFLib", "RDF-Library" is a python library for working with RDF, a simple yet powerful language for representing information. This library contains parsers/serializers for almost all the known RDF serializations, such as RDF/XML, Turtle, N-Triples, Json-LD, many of which are now supported in their updated form.

"Blazegraph^{®} is an ultra-high-performance graph database "DB" supporting blueprints and RDF/SPARQLAPIs. It supports up to 50 billion edges on a single machine.

Summing up, the problems arising with the current state of art referring to (R2)RML mapping processors landscape are
a) Lack of rapid interoperability due to presence of varied tools with different interfaces, serializations and usage as well as
b) Switching between input and output formats for legacy systems is a time and effort consuming exercise due to the need to locate and plug the right mapping tools.

As a manifestation of these problems e.g., in energy conversion businesses, below a use case is being described that highlights these problems from a practical perspective.

Referring to handling multiple formats and tools of source data the following use case example may show the application of (R2)RML mappings.

Operational units that cater to products whose lifecycle span multiple decades would have used a variety of tools to capture their product lines specifications and bills of materials. A relevant example is the turbine family of products, where there could be relational databases that have been employed to capture their details. The platforms for these source databases could themselves have been switched over to newer ones with passage of time and upgradation of scale and variety of products. Some examples are Oracle, MySQL, MS SQL, Postgre SQL and DB2. Similarly, the variety of tools used to capture and use RDF representations themselves might also been updated or changed, to keep up with the scalability and compatibility requirements. Examples of RDF serializations are Turtle, N-Triples, JSON-LD and N-Quads, with rapid advancements in semantic web technology. There is also a variety of graph databases that are in vogue today, such as GraphDB, Amazon Neptune, Blazegraph, Virtuoso, to name a few.

In this scenario, the compatibility of existing (R2)RML processors might have to be repeatedly ensured when there is a change in either the relational database side or on the RDF side.

Referring to digitalization of legacy assets:
A related use case scenario is that when a digital twin has now to be built for a dated turbine, but all the data exists only in legacy relational DB systems - the amount of effort needed to bring the legacy system up to speed with existing (R2)RML and RDF systems may be non-trivial. For example, when forecasted events data for a turbine package is now inserted in Snowflake database and the actual (R2)RML processor is unable to handle this database input because the legacy system has no connectivity with newer database systems. The trivial solution is to export the data from unsupported system and integrate it in another database before ETL pipeline, but this procedure may cause additional costs, unwanted effort and alteration of data.

In a typical usage a (R2)RML processor is selected after evaluating several existing solutions. However, having only one processor means that changing requirements could be conflicting with the features of the processor. The result of that could be that a solution is replaced with a new processor.

As state of the art, the ETL process is handled in the limited area of supported systems. If a new requirement is out of this area, usually, the method to solve the problem is to adapt the requirement to the actual acceptance of the system used. For example, if there is a new input of source data unaccepted by the (R2)RML processor, the data contained in this source dataset is moved first into another processor-approved known source database and then continued with the state-of-the-art pipeline.

Insofar, there is no existing technical teaching of an interoperable solution to the problem of handling multiple varieties of relational source database(s) and RDF formats found in literature. The currently understood solution is to separately develop a processor for handling a new input or output format as and when the need arises.

It is object of the present invention to provide a method to automatically adapt the requirement to the actual acceptance of the system used to continue with the ETL process pipeline.

This object is being solved by the wrapper, computer program product, system and the computer implemented method for data transformation as disclosed by the present description, figures, and claims.

Accordingly, the subject of the present invention is the wrapper, the method and system for transformation of relational source data into result data.

A wrapper according to the present invention is characterized in that it is for mapping-based transformation of source data in RDB format into semantic graph dataset in RDF format, the wrapper comprising communicative coupling to
- at least one first memory unit providing (R2)RML mapping files,
- optionally one second memory unit providing source configuration(s)
- at least one third memory unit providing source data in RDB format
- at least one processing unit being configured as a (R2)RML processor
- at least one fourth memory unit to store result data in RDF format.

Accordingly, this object is being solved by a system for transformation of relational source data into result data suitable to build up a knowledge graph, the system being executed by RML and/or R2RML mapping rule execution comprising
- several recording, monitoring, sensor and/or measurement devices to generate source data as well as one or more suitable third memory unit(s);
- several RML and/or R2RML mapping processors;
- whereby the several RML and/or R2RML processor units are each communicatively coupled to the wrapper service being communicatively coupled to at least one third memory unit storing the source data, being optionally communicatively coupled to at least one second memory unit storing source configuration(s) and being communicatively coupled to at least one (R2)RML processing unit,
- the wrapper service being an abstract interface and/or
- the wrapper service being agnostic to input and output formats, since it is configured to be a generic service that consolidates several varying RML and/or R2RML mapping processors that differ in various aspects, such as interfaces, forms of access, input/output modes, supported databases and/or formats.

A further subject of the present invention is a computer implemented method of mapping-based transformation of source data in RDB format into result data in RDF format, the method comprising the steps of
- Uploading a (R2)RML file from first memory unit (104) to the wrapper service (100)
- Uploading of source data from third memory unit (106)
- Starting (R2)RML mapping by processing unit (52, 53, 54...n; 101, 102, 103, ...m)
- Optionally uploading a configuration file from second memory unit (105) for connecting a database of source data in RDB format to the wrapper service (100)
- Executing (R2)RML mapping by processing unit (52, 53, 54...n; 101, 102, 103, ...m)
- Storing result data in RDF format in fourth memory unit (107) .

Finally, a computer program product being configured to execute a computer implemented method as described above is subject of the present invention as well as another computer program product with a program code stored on a machine-readable data carrier for carrying out a computer implemented method as described above.

The computer program product may be, for example, a computer program or comprise another element apart from the computer program. This other element may be hardware, for example a memory device, on which the computer program is stored, a hardware key for using the computer program and the like, and/or software, for example a documentation or a software key for using the computer program.

The wrapper service is configured to wrap any incoming source data and/or -optionally - source configuration to fit into the available ETL process and/or in any of the available (R2)RML processing units. The wrapper service thus serves as a common and/or unique interface to source datasets, source data configurations and (R2)RML mapping files to be transformed by known (R2)RML processor units to result data in graph data format like RDF. The wrapper service is accordingly agnostic to input and output formats.

The concept of "platform agnostic" refers to a set of specific design attributes and philosophies normally associated to software products. An agnostic type of software would in fact be free from any ties to a specific platform or system and run equally well across more than one platform.

The invention proposes a solution to address the issues described above by the wrapping as a generic service that consolidates varied (R2)RML mapping processors, that differ in various aspects, e.g., interfaces, forms of access, input/output modes and/or supported databases. Though the individual (R2)RML processors are still necessary, the wrapper service serves as an abstract interface defining certain concrete functionalities and/or the best possible time for RDF generation. The actual mapping nevertheless is to be implemented by the individual processors.

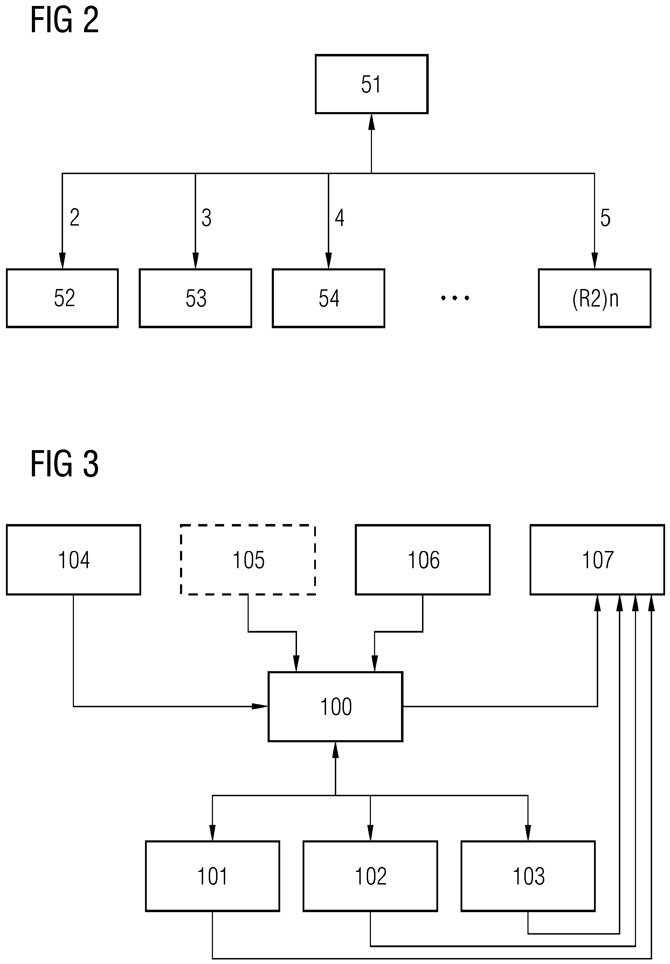

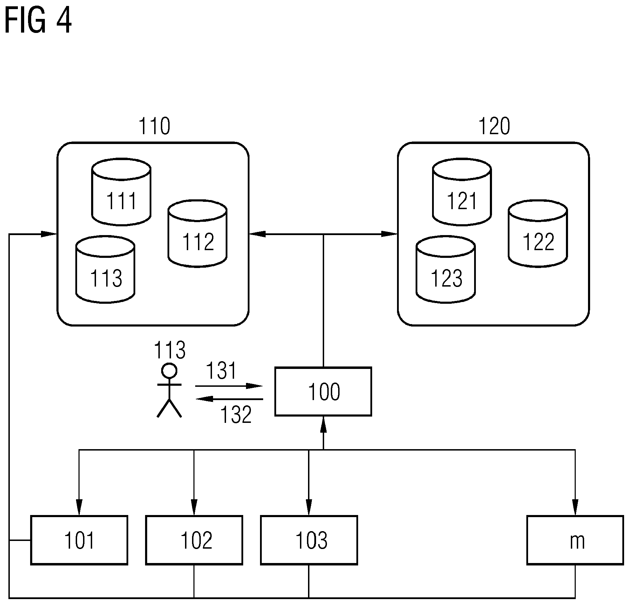

Figure 2 shows the wrapper service and the usage of existing (R2)RML processors. The wrapper service 51 being a hardware and/or software component serving as an interface for incoming source data and source data configurations as well as for a number of different (R2)RML processor units 52, 53, 54, to ...."n". The wrapper service interface 51 could possibly be a REST API "http" with - see figure 4 - request 131 and response 132 usage. It could also be a library that is used within other applications. Interfaces 52, 53, 54 to ...n, are provided by each (R2)RML processor. The interfaces can be based on files or provide APIs and are used by the wrapper service.

A "REST API" also known as "RESTful API" "http" is an application programming interface - so called API or web API - that conforms to the constraints of REST architectural style and allows for interaction with RESTful web services. "REST" stands for "representational state transfer". A REST API works essentially the same way that any website does. A call is made from a client to a server, and data is received back over the HTTP protocol. REST APIs are built to take advantage of pre-existing protocols within an environment, most commonly over HTTP for a Web API. The REST API design is more lightweight and is known for its vast flexibility in enabling modern business connectivity.

A "library" is a collection of precompiled routines that a program can use. The routines, sometimes called modules, are stored in object format. Libraries are particularly useful for storing frequently used routines because it is not necessary to explicitly link them to every program that uses them.

The REST API and library are just examples of possible realizations of the wrapper as they are subject of the present invention. Further examples are graphical user interface and/or all kind of communication protocols suitable for that purpose.

A "communication protocol" is a system of rules that defines the rules, syntax, semantics and synchronization of communication and possible error recovery methods. For example, it allows two or more entities of a communications system to transmit information via any kind of variation of physical quantity.

A "graphical user interface" is a contrast to text-based user interfaces, typed command labels or text navigation. Typically, a graphical user interface is a form of user interface that allows users to interact with electronic devices through graphical icons and/or audio indicator such as primary notation.

Figure 3 shows as schematic view the operational surrounding of the wrapper service according to one preferred embodiment of the invention. Central module and first processor wrapper service 100 is communicatively coupled to some (R2)RML processing units 101, 102 and 103. During the process of transformation of source data into result data for semantic graphs the central wrapping service 100 is communicatively coupled to a first memory unit 104, providing a mapping file or several mapping files. Besides, the central wrapping service 100 is optionally communicatively coupled to a second memory unit 105, having source configuration(s) stored therein. Source configuration refers to the configuration parameters used to connect to the source database, respective dataset, e.g., database server, host name, port and/or credentials. Besides, the central wrapping service 100 is communicatively coupled to a third memory unit 106, having access to the source data, either stored therein or the third memory unit being part of a device to generate source data like a sensor, a monitoring device and/or a measuring module creating source data in relational data format. Finally, the central wrapping service 100 is communicatively coupled to a fourth memory unit 107 where the result data of the transformation process are stored in graph data format like RDF. The fourth memory unit 107 may be communicatively coupled to either one or several of the processing units 101 to 103 as well directly as by the central wrapping service 100.

Figure 4 shows an example of an embodiment according to the present invention covering one or more of the shown components of the central wrapper service 100 of figure 3:
The wrapper service 100 as shown in figure 4 is communicatively coupled to source databases 110 like MySQL 111, MSSQL 112, PostgreSQL 113 and the wrapper service 100 is communicatively coupled to graph databases 120 like Blazegraph 121, GraphDB 122 and/or Amazon Neptune 123.

Besides, the wrapper service 100 is optionally communicatively coupled to a tool for interaction with a user, like actor 130 who is able to request 131 or respond 132 to the wrapper service 100 as well.

Finally, as already being shown in figure 3, the central wrapper service 100 is communicatively coupled to several (R2)RML processing units 101 to m.

Figure 4 shows a REST API "http" for the wrapper service. The same workflow could also be provided as a library used within applications "apps".

Describing the process, the following actions are executed:
Step 1 - optionally -: Upload a configuration file for connecting a database to the wrapper service 100 e.g., from a second memory unit 105 as shown in figure 3.
Step 2: Upload a (R2)RML file to the wrapper service 100, for example from a first memory unit 104 see figure 3.
   Optional step between steps 2 and 3: Upload a configuration file for connecting a graph database to the wrapper service 100, if the result should be stored in a graph database. Otherwise, the result can be returned in the response 132.
Step 3: Send request to start the mapping to the wrapper service
   Optional step: Required pre-processing is executed by the wrapper service, e.g., transforming data from a legacy database to a supported database for the (R2)RML processor
Step 4: executing the (R2)RML mapping.
Step 5: Store the results in the specified graph database or return the results in the response.
Optional: Required post-processing step, like applying update interrogations on data stored in graph database, is executed by the wrapper service.

By ensuring that a user interacts with this wrapper service, and not with any individual (R2)RML processor, the user remains agnostic to variations in database and graph database formats. This insulates the user from worrying about the need to cross check for compatibility of each (R2)RML processor. All user requests arrive at the wrapper service, which then decides automatically, and/or AI driven to delegate actions to the respective processors appropriately, based on the match of capabilities of the list of individual tools. After the processing is complete, the processors communicate the results back to the wrapper service, which finally returns them to the original requestor.

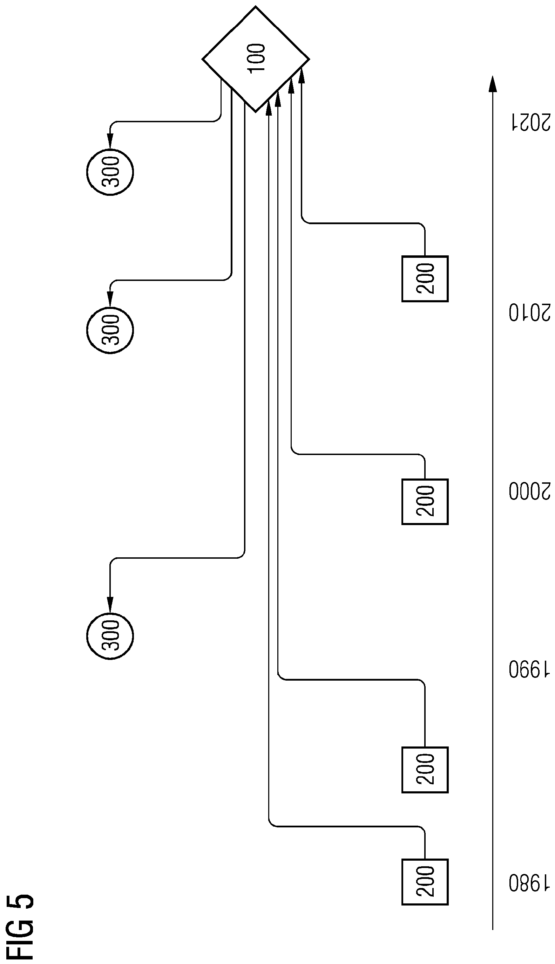

Figure 5 shows a timeline during which database was adapted and/or deployed: 1980 only relational databases 200 - shown as bottom squares 200 - existed. Between the years 1990 and 2000 first RDF databases - shown as circles 300 - were generated and used. Nowadays in the year 2021, (R2)RML wrapper 100 is invented to economically and quick shift from RDB format of source data 200 to RDF format of graph databases 300.

For example, products whose lifecycle typically span over multiple decades, a (R2)RML wrapper service 100 as described for the first time here, can be used for business that deal with those products. Examples of such domains are shipping industry, aircraft industry, oil and gas, power plant installations as well as mobility verticals.

In such domains, there could have been varied, non-uniform sources of relational data that has been accumulated over the years. Also, due to the developing nature and different requirements there could be fragmented use of different graph databases. When the time arises to integrate the sources of data for such products, additional cost would be incurred to individually address the integration of such sources to result in graph databases. The availability of such a wrapper would make the integration less problematic. Otherwise, the mappings once defined would have to be redone completely for any new combination of input and output tools. If we now extrapolate this case to several such databases and graph databases that were in vogue at different time points, the wrapper can also help with backward compatibility to address, for example a graph database that was deployed in 2000s but is still operational.

Rather than replacing legacy systems completely, a wrapper service can support the migration to a newer system. The new service can be gradually introduced with the wrapper service that abstracts the existing solutions. It might also support rolling back or switching between systems with minimal interference and effort.

The perceived benefits of using a wrapper service as described are as follows:
- Simplicity: The proposed solution serves as a simplistic interface that absorbs complexities arising from diverse tool implementations, accelerates registration of other tools, both existing and new, e.g., when new versions are released. Also, it helps to insulate the users from the complexities of using diverse technologies and focus on the input and output interactions.
- Consistency: The proposed service serves as a consistent interface to mask the various differences among the tools concerning interfaces, forms of access, database support, inputs, outputs, output serialization formats, etc. Additionally, the solution offers consistency in terms of setup, deployment, and usage.
- Contribution to standards: A potential long-term effect of such a service could be its contribution towards the definition and development of best practices, guidelines, and standards related to tools dealing with (R2)RML specifications. E.g., what are the categories of databases that need to be supported, which RDF serialization formats should be handled.
- Consistent ETL Pipelines: If the individual tools are aligned with the proposed wrapper service, the task of building ETL pipelines becomes consistent.
- Reuse of ETL Pipelines: The pipelines based on the wrapper service can be widely reused and adapted.
- Interoperability: Typically, business architectures, especially in industrial use cases that Siemens deals with, have a combination of legacy and new tools/systems. Such a unification service makes coexistence and interoperability possible rather than having to deal with costs resulting from migration of one system to another.
- Stable & Robust ETL workflows: Dynamically changing requirements in use cases after a specific solution has been integrated result in repetitive changes to the workflows. Having one unification service helps to overcome such changes and ensures a stable architecture.
- Acceleration of projects: Using the proposed services helps in overcoming usual bottlenecks concerning data pipelines thereby ensuring rapid realization of projects.

For example, if there is a new input data source unaccepted by the (R2)RML processor, the data contained in this data source does no longer need to be moved first into another processor-approved database and then continue with the normal pipeline but will be automatically forwarded to the compatible processor unit.

## Claims

1. Wrapper for mapping-based transformation of source data in RDB format into semantic graph dataset in RDF format, the wrapper providing a unified and agnostic interface comprising communicative coupling to
- at least one first memory unit 104 providing (R2)RML mapping files,
- optionally one second memory unit 105 providing source configuration(s)
- at least one third memory unit 106 providing source data in RDB format
- at least one processing unit (52, 53, 54...n; 101, 102, 103, ...m) being configured as a (R2)RML processor
- at least one fourth memory unit 107 to store result data in RDF format.

2. Wrapper according to claim 1 being realized as REST API.

3. Wrapper according to claim 1 or claim 2, being realized as library.

4. Wrapper according to one of claims 1 to 3, being communicatively coupled to databases 110, covering one or more like MySQL, MSSQL, PostgreSQL.

5. Wrapper according to one of the previous claims, being communicatively coupled to graph databases like Blazegraph, GraphDB and/or Amazon Neptune.

6. System for transformation of relational source data into result data suitable to build up a knowledge graph, the system being executed by RML and/or R2RML mapping rule execution comprising
- several recording, monitoring, sensor and/or measurement devices to generate source data as well as one or more suitable third memory unit(s) (106);
- several RML and/or R2RML mapping processors (52, 53, 54...n; 101, 102, 103, ...m);
- whereby the several RML and/or R2RML processor units (52, 53, 54...n; 101, 102, 103, ...m) are each communicatively coupled to the wrapper service (100) being communicatively coupled to at least one third memory unit (106) storing the source data, being optionally communicatively coupled to at least one second memory unit (105) storing source configuration(s) and being communicatively coupled to at least one (R2)RML processing unit (52, 53, 54...n; 101, 102, 103, ...m),
- the wrapper service being an abstract interface and/or
- the wrapper service being agnostic to input and output formats, since it is configured to be a generic service that consolidates several varying RML and/or R2RML mapping processors that differ in various aspects, such as interfaces, forms of access, input/output modes, supported databases and/or formats.

7. System according to claim 6, wherein the wrapper service (100) is communicatively coupled to an input device being configured to receive and forward request(s) as well as response(s) of an actor (130).

8. Computer implemented method of mapping-based transformation of source data in RDB format into result data in RDF format, the method comprising the steps of
- Uploading a (R2)RML file from first memory unit (104) to the wrapper service (100)
- Uploading of source data from third memory unit (106)
- Optionally uploading a configuration file from second memory unit (105) for connecting a database of source data in RDB format to the wrapper service (100)
- Starting (R2)RML mapping by processing unit (52, 53, 54...n; 101, 102, 103, ...m)
- Executing (R2)RML mapping by processing unit (52, 53, 54...n; 101, 102, 103, ...m)
- Storing result data in RDF format in fourth memory unit (107) .

9. Computer implemented method according to claim 8 further comprising the step of
- sending request (131) to wrapper service (100) to start the mapping.

10. Computer implemented method according to one of claims 8 or 9, further comprising the step of
- Pre-processing of the source data by the wrapper service 100.

11. Computer implemented method according to claim 10, wherein the step of pre-processing is covering a transformation from a legacy dataset as source data to a supported database for a (R2)RML processing unit (52, 53, 54...n; 101, 102, 103, ...m).

12. Computer implemented method according to one of claims 8 to 11, further comprising the step of
- Post -processing on result data in RDF format stored in a fourth memory unit (107).

13. Computer implemented method according to claim 12, wherein the step of post-processing is covering applying update interrogations on result data stored in a fourth memory unit (107).

14. Computer program product being configured to execute a computer implemented method according to one of claims 8 to 13.

15. Computer program product with a program code stored on a machine-readable data carrier for carrying out a computer implemented method according to one of claims 8 to 13.
